# EUROPÄISCHE PATENTSCHRIFT

(11) **EP 2 502 291 B1**
(45) Veröffentlichungstag und Bekanntmachung des Hinweises auf die Patenterteilung: **22.07.2020**
(21) Anmeldenummer: 10757199.4
(22) Anmeldetag: 23.09.2010
(51) Int. Cl.: H01M 10/625, H01M 10/6553, H01M 2/24, H01M 10/647, H01M 10/6556, H01M 10/613, H01M 10/656, H01M 2/02, H01M 2/12, H01M 10/0525

(54) **BATTERIE MIT EINER MEHRZAHL VON BATTERIEZELLEN**
BATTERY HAVING A PLURALITY OF BATTERY CELLS
BATTERIE PRÉSENTANT UNE PLURALITÉ D'ÉLÉMENTS DE BATTERIE

(30) Priorität: 18.11.2009 DE 102009046801
(43) Veröffentlichungstag der Anmeldung: 26.09.2012
(73) Patentinhaber: Samsung SDI Co., Ltd., Gyeonggi-do (KR); Robert Bosch GmbH, 70442 Stuttgart (DE)
(72) Erfinder: YAN, Xiaofeng, 71384 Weinstadt (DE)
(74) Vertreter: Bee, Joachim
(86) Internationale Anmeldenummer: PCT/EP2010/064005
(87) Internationale Veröffentlichungsnummer: WO 2011/060980

(56) Entgegenhaltungen:
- EP-A1- 1 701 404
- EP-A1- 1 744 383
- EP-A1- 2 077 592
- EP-A2- 2 065 963
- DE-A1- 2 737 837
- DE-A1-102005 031 504
- DE-T2- 60 213 474
- DE-T2- 69 925 067
- US-A1- 2006 134 514
- US-A1- 2007 009 792

## Beschreibung

Die vorliegende Erfindung betrifft eine Batteriezelle, deren Körper eine Grundfläche, eine Deckfläche und wenigstens eine winklig zur Grundfläche angeordnete Seitenfläche aufweist, wobei die maximale Erstreckung der Grundfläche größer ist als die durch die Seitenfläche definierte Höhe des Batteriezellenkörpers, und wobei die Batteriezelle den jeweiligen Batteriezellenpolen zugeordnete Terminals aufweist. Erfindungsgemäß betrifft die vorliegende Erfindung eine Batterie mit einer Mehrzahl der Batteriezellen.

### Stand der Technik

Batteriezellen sowie aus Batteriezellen zusammengesetzte Batterien sind weitgehend bekannt. Dabei ist unter einer Batteriezelle sowie auch unter einer aus Batteriezellen zusammengesetzten Batterie jeweils ein Akkumulator zu verstehen, der elektrisch ladbar und wieder entladbar ist. Die Batteriezelle ist dabei eine einzelne galvanische Zelle, die je nach Kombination der Materialien der Elektroden der Zelle eine charakteristische Spannung liefert. Zum Aufbau einer Batterie aus mehreren Batteriezellen werden diese elektrisch in Serie oder parallel geschaltet.

Es sind dabei insbesondere Lithium-Ionen-Batterien bekannt, die als wieder aufladbare Energiespeicher insbesondere in mobilen Geräten oder Einrichtungen Anwendung finden. Lithium-Ionen-Batterien sind insbesondere zur Elektrifizierung bzw. zur Teilelektrifizierung von elektrisch angetriebenen Fahrzeugen vorgesehen. Zur Gewährung einer ausreichenden Betriebssicherheit sowie Leistungsbereitstellung sind die Lithium-Ionen-Batterien in einem optimalen Temperaturbereich zu betreiben. Zudem besteht die Anforderung an Lithium-Ionen-Batterien, dass sie eine hohe Energie- und Leistungsdichte aufweisen und demzufolge ein volumenoptimiertes Volumen aufweisen und einen dementsprechenden Bauraum im Fahrzeug beanspruchen.

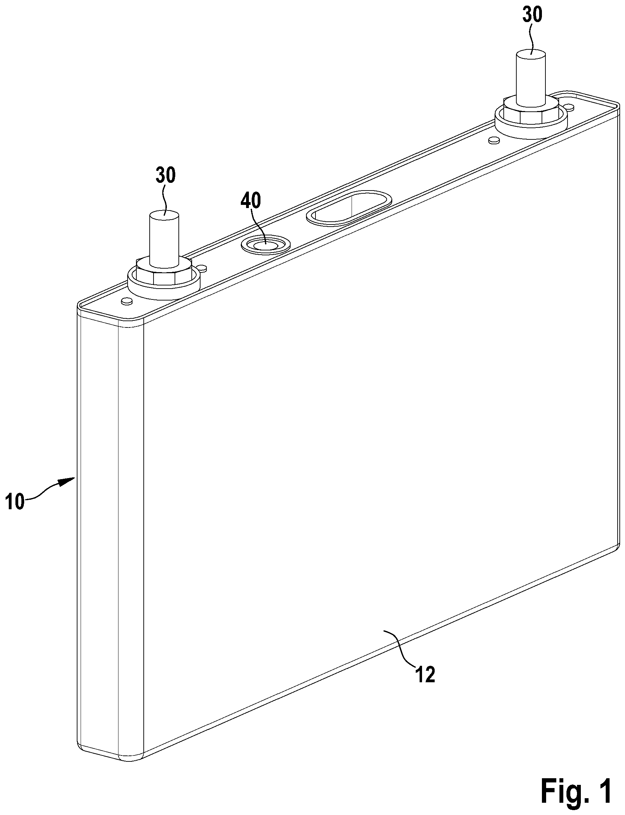

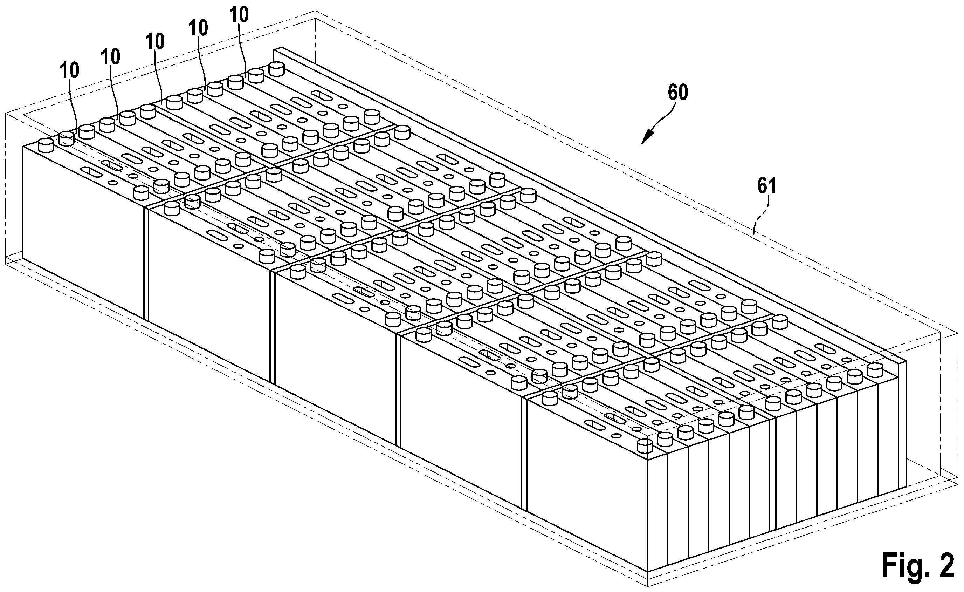

Eine derartige bereits in Fahrzeugen eingesetzte Batteriezelle ist in Fig. 1 dargestellt. Aus Fig. 2 ist eine aus Batteriezellen gemäß Fig. 1 zusammengesetzte Batterie ersichtlich. Die herkömmliche Batteriezelle 10 in Fig. 1 weist ein Batteriezellengehäuse 12 auf, an dem an der Oberseite zwei Terminals 30, jeweils den unterschiedlichen Polen zugeordnet, und eine Berstdrucköffnung 40 angeordnet sind. Die Berstdrucköffnung 40 ist üblicherweise mit einem Berstdruckventil versehen und erfüllt somit eine Sicherheitsfunktion, wobei sie bei Erhöhung der Temperatur in der Batteriezelle 10 über ein bestimmtes Maß hinaus entstehende Reaktionsprodukte in Form von Gasen aus der Batteriezelle 10 entlässt, um eine Explosion zu vermeiden. Aus Fig. 2 ist ersichtlich, dass die Batteriezellen 10 in einem Batteriegehäuse 61 die Batterie 60 ausbilden. Die Terminals 30 sowie auch die Berstdrucköffnungen 40 sind dabei an den Oberseiten der Batteriezellen 10 positioniert. Das heißt, dass üblicherweise die Batteriezellen 10 derart verwendet werden, dass sich die Terminals 30 sowie die Berstdrucköffnungen 40 an ihren Oberseiten und somit auch an der Oberseite der Batterie 60 befinden. Es besteht dabei die Anforderung an das Volumen einer Batteriezelle oder einer Batterie, eine immer höhere Energie- bzw. Leistungsdichte zur Verfügung zu stellen. Aus diesem Grund sind die Elektroden der Batteriezellen sehr dicht zueinander beabstandet und einzelne Batteriezellen, wie in Fig. 2 dargestellt, in dichten Paketen angeordnet.

Stand der Technik sind die Dokumente DE 10 2005 031504 A 1 und EP 2 077 592 A1.

### Offenbarung der Erfindung

Die Erfindung umfasst eine Batterie mit einer Mehrzahl von Batteriezellen gemäss Anspruch 1. Dabei wird eine Batteriezelle zur Verfügung gestellt, deren Körper eine Grundfläche, eine Deckfläche und wenigstens eine winklig zur Grundfläche angeordnete Seitenfläche aufweist, wobei die maximale Erstreckung der Grundfläche größer ist als die durch die Seitenfläche definierte Höhe des Batteriezellenkörpers und wobei die Batteriezelle den jeweiligen Batteriezellenpolen zugeordnete Terminals aufweist. Dabei sind die Terminals an wenigstens einer Seitenfläche der Batteriezelle angeordnet. Mit der Grund-, Deck- und Seitenfläche sind die Flächen der Batteriezelle in einer Position gemeint, wie sie im bestimmungsgemäßen Gebrauch eingesetzt wird, so dass die Terminals seitlich an der Batteriezelle angeschlossen sind und nicht auf einer Deckfläche, wie es den herkömmlichen Ausführungen entspricht. Die Batteriezelle ist relativ flach ausgeführt, wodurch sie in verbesserter Weise den Bauraumanforderungen, insbesondere den Bauraumanforderungen in elektrisch angetriebenen Fahrzeugen, entspricht. Im Vergleich zu herkömmlichen Batteriezellen, wie zum Beispiel in Fig. 1 dargestellt, weist sie eine vergrößerte Bodenfläche auf, die als Kontaktfläche für eine angeschlossene Kühlung dienen kann. Durch die Positionierung der Terminals an der Seitenfläche ist der Anschluss von seitlichen Stromschienen möglich, die somit ebenfalls nicht in der Höhe Bauraum beanspruchen.

Die erfindungsgemässe Batterie umfasst eine Mehrzahl von Batteriezellen welche im Wesentlichen eine Quaderform aufweisen. Eine Batteriezelle kann zwei Terminals aufweisen, wobei jeweils ein Terminal an einer von zwei sich gegenüberliegenden Seitenflächen der Batteriezelle angeordnet ist. Alternativ kann vorgesehen sein, dass die Batteriezelle zwei Terminals aufweist, wobei beide Terminals an derselben Seitenfläche der Batteriezelle angeordnet sind.

Es ist des Weiteren vorgesehen, dass die Batteriezelle wenigstens eine Berstdrucköffnung aufweist, welche an einer der Seitenflächen angeordnet ist. Dabei ist diese Berstdrucköffnung vorteilhafterweise unter einem der Terminals angeordnet und derart ausgestaltet, dass es mit einem Ventil versehen werden kann oder bereits mit einem Ventil versehen ist. Insbesondere eine derart positionierte Berstdrucköffnung ermöglicht in einfacher Weise die Anordnung einer zentralen Leitung zur Verbindung mehrerer Berstdrucköffnungen zur Abführung von freigesetzten Fluiden, wie zum Beispiel Elektrolyt oder Gasen. Es wird dabei die Gefahr einer Kettenreaktion, basierend auf übermäßiger Erwärmung einer Batteriezelle, gemindert. Die Terminals sowie auch die Berstdrucköffnungen sind somit an einer relativ kleinflächigen Seitenwand der Batteriezelle angeordnet, so dass bei quaderförmigen Batteriezellen großflächigere Seitenflächen zur Erzeugung einer Kühlwirkung zur Verfügung stehen. Außerdem sind bei Verbindung der Terminals bzw. Berstdrucköffnungen untereinander Verbindungsleiter, wie zum Beispiel Pol-Verbinder oder Gasleitungssysteme, mit relativ kurzen Abmaßen anschließbar, was die Material- und Fertigungskosten mindert.

Die Batteriezelle ist dabei derart ausgestaltet, dass sie mittels wenigstens einer Trennwand in Zelleinheiten unterteilt ist. Durch die Anordnung von n Zellwänden lassen sich n+1 Zelleinheiten realisieren. Die Zelleinheiten sind dabei bevorzugt in Serie geschaltet und können in ihrem inneren, durch die Zellwände abgeteilten Raum, gerollte oder laminierte Elektroden aufweisen. Die Trennwände können vertikal oder horizontal angeordnet sein.

Als bevorzugte Ausführungsform ist vorgesehen, dass die Trennwand zur Fixierung und/oder Positionierung der Elektroden wenigstens einer Zelleinheit dient. Das heißt, dass mittels der Zellwand die Elektroden einer Zelleinheit an den für sie vorgesehenen Ort gehalten werden.

Zwecks verbesserter Kühlwirkung ist vorgesehen, dass die Trennwand derart wärmeleitfähig ausgestaltet ist, dass mit ihr eine Wärmeableitung aus wenigstens einer durch sie abgegrenzten Zelleinheit zur Oberfläche der Batteriezelle realisierbar ist. Die Trennwand erfüllt somit zusätzlich die Funktion eines Wärmeleiters zum Transport von Wärme vom Innenraum der Batteriezelle zur Oberfläche der Batteriezelle und zur dortigen Abgabe an die Umgebung.

Es wird außerdem eine Batterie zur Verfügung gestellt, die eine Mehrzahl der Batteriezellen umfasst, wobei die Batteriezellen, im Paket die Batterie ausbildend, derart angeordnet sind, dass sich ihre Batteriepole an wenigstens einer Seitenfläche des Batteriezellenpaketes befinden. Das heißt, dass in ähnlicher Ausführung wie die der Batteriezellen die Batteriepole bzw. -terminals nicht an der Oberseite der Batterie bzw. des Batteriezellenpaketes angeordnet sind, sondern an wenigstens einer der Seitenflächen der Batterie.

Zwecks verbesserter Ableitung von aus den Batteriezellen austretenden Fluiden ist erfindungsgemäß vorgesehen, dass mehrere der Batteriezellen eine Berstdrucköffnung aufweisen, wobei diese Berstdrucköffnungen an eine Zentralleitung zur Ableitung der Fluide angeschlossen sind.

Zur effizienten und bauraumsparenden Kühlung der Batterie ist vorgesehen, dass die Batterie wenigstens eine erste Kühlplatte aufweist, wobei die Batteriezellen mit ihren Grundflächen auf der ersten Kühlplatte aufliegen und/oder dass die Batterie wenigstens eine zweite Kühlplatte aufweist, wobei die zweite Kühlplatte auf den Deckflächen der Batteriezellen aufliegt. Diese Anordnung von Kühlplatten über und unter dem Batteriezellenpaket ist insbesondere dadurch möglich, weil die Batteriezellen an ihren Oberseiten weder die Terminals noch die Berstdrucköffnungen bzw. Ventile aufweisen, so dass Kühlplatten direkt auf die Oberflächen der Batteriezellen aufgelegt werden können. Dabei ist die Erfindung nicht auf die Anordnung von Kühlplatten auf der Grund- und/ oder Deckflächen der Batteriezellen eingeschränkt, sondern es kann alternativ oder hinzukommend vorgesehen sein, dass Kühlplatten auch an den Seitenflächen der Batteriezellen anliegen, die eine Wärmeableitung aus den Zellen bewirken. Mit dieser Ausgestaltung wird die benötigte Bauraumhöhe gemindert.

In besonderer Ausführungsform ist dabei vorgesehen, dass die Batteriezellen nebeneinander und übereinander in Batteriezellenpaketen angeordnet sind, wobei die auf den Deckflächen der Batteriezellen aufliegende zweite Kühlplatte gleichzeitig die erste Kühlplatte für eine darüber befindliche Ebene von Batteriezellen ist, die mit ihren Grundflächen auf dieser Kühlplatte aufliegen. Damit ist ein Schichtaufbau von im Paket vorliegenden Batteriezellen möglich, wobei die Batteriezellen der einzelnen Schichten, bis auf die oberste und unterste Schicht, beidseitig durch die erste und zweite Kühlplatte gekühlt werden.

Die Erfindung wird im Folgenden anhand der beiliegenden Zeichnungen erläutert. Es zeigt dabei:
- Fig. 1: eine herkömmliche Batteriezelle in perspektivischer Ansicht,
- Fig. 2: eine herkömmliche Batterie in perspektivischer Ansicht,
- Fig. 3: eine Batteriezelle in perspektivischer Ansicht,
- Fig. 4: eine Trennwand in Ansicht von vorn,
- Fig. 5: eine geöffnete Batteriezelle in Ansicht von oben,
- Fig. 6: eine geöffnete Batteriezelle erster Ausführungsform in Ansicht von der Seite,
- Fig. 7: eine geöffnete Batteriezelle zweiter Ausführungsform in Ansicht von der Seite,
- Fig. 8: ein Batteriezellenpaket in Ansicht von vorn,
- Fig. 9: eine Batteriezelle in Ansicht von der Seite,
- Fig. 10: ein System zum Betreiben einer Batterie mit Thermomanagementsystem in schematischer Darstellung,
- Fig. 11: eine Trennplatte erster Ausführungsform,
- Fig. 12: eine Trennplatte zweiter Ausführungsform,
- Fig. 13: eine Einkapselung eines Terminals in Schnittdarstellung von der Seite,
- Fig. 14: ein Batteriezellenpaket mit gemeinsamer Trennplatte in Ansicht von vorn,
- Fig. 15: ein Terminal mit Klemmelement in Schnittdarstellung von der Seite,
- Fig. 16: eine Bedeckung am Terminal in Schnittdarstellung von der Seite,
- Fig. 17: Darstellung der Bedeckung gemäß Fig. 16 in Ansicht von oben,
- Fig. 18: einschichtiges Batteriezellenpaket mit Kühlplatten in Ansicht von vorn,
- Fig. 19: mehrschichtiges Batteriezellenpaket mit Kühlplatten in Ansicht von vorn.

Auf die Fig. 1 und 2 wurde bereits zur Erläuterung des Standes der Technik Bezug genommen.

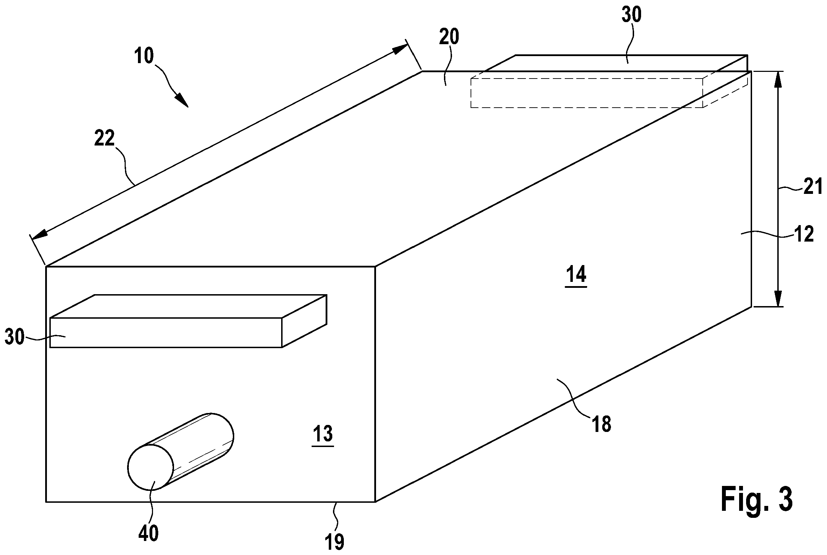

Fig. 3 zeigt eine Batteriezelle 10, die eine Grundfläche 19 und eine Deckfläche 20 aufweist, wobei die Grundfläche 19 mit der Deckfläche 20 durch mehrere Seitenflächen 18 miteinander verbunden ist, so dass die Batteriezelle 10 im Wesentlichen eine Quaderform aufweist. Die durch die Seitenfläche 18 definierte Höhe 21 der Batteriezelle 10 soll geringer sein als die maximale Erstreckung 22 der Grundfläche 19 bzw. der Deckfläche 20. An der Stirnwand 13, die somit ebenfalls eine Seitenfläche 18 ist, sind im Batteriezellengehäuse 12 eines der Terminals 30 sowie die Berstdrucköffnung 40 angeordnet. Das andere Terminal 30 ist an der gegenüberliegenden Stirnwand 13 angeordnet. Daraus ergibt sich, dass die Grundfläche 19 sowie die Deckfläche 20 und die Seitenwände 14 im Wesentlichen glatte Batteriezellengehäusewände ausbilden und somit vorteilhaft geeignet sind, mittels einer flächig anliegenden Kühleinrichtung Wärme aus der Batteriezelle 10 abzuleiten. Die geringe Höhe 21 der Batteriezelle ermöglicht in einfacher Weise die Anordnung der Batteriezelle 10, ggf. auch in einem Batteriezellenpaket, in niedrigen Bauraumverhältnissen.

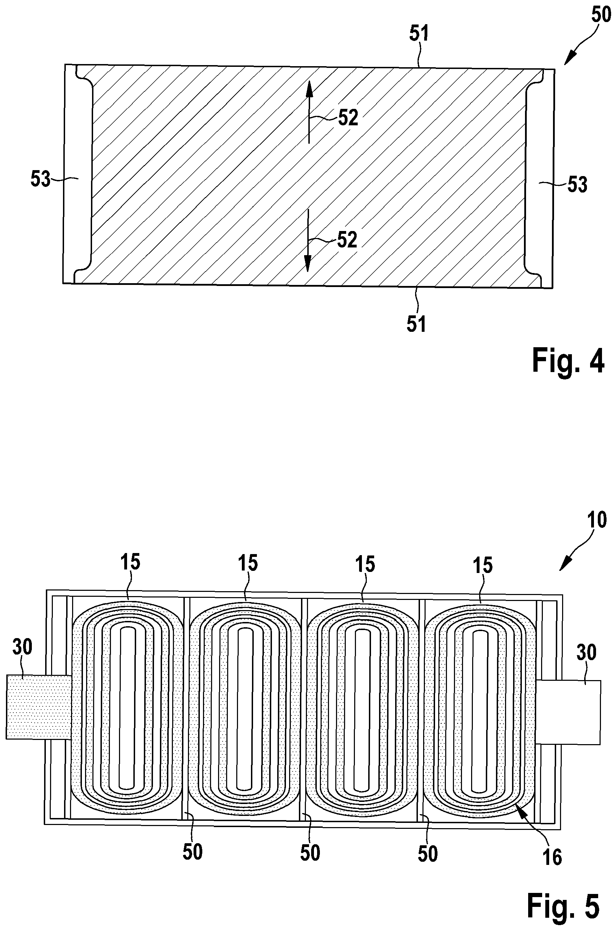

Zur Unterteilung des durch ein Batteriezellengehäuse 12 definierten Innenraums einer Batteriezelle 10 sind Trennwände, wie in Fig. 4 dargestellt, vorgesehen. Mittels dieser Trennwände 50 lässt sich die Batteriezelle 10 in mehrere gleich große oder unterschiedlich große Zelleinheiten 15 aufteilen. Eine derartige Trennwand 50 ist mit jeweils zwei Anlagekanten 51 mit dem Batteriezellengehäuse 12 verbunden. Die Trennwand 50 besteht vorteilhafterweise aus einem wärmeleitfähigen Metall, wie zum Beispiel Kupfer oder Aluminium oder einer entsprechenden Legierung. Die Trennwand 50 dient in erster Linie zur mechanischen Halterung der Elektroden 11 im Inneren der Batteriezelle 10. Durch die Verbindung mit dem Batteriezellengehäuse 12 dient die Trennwand 50 außerdem zum Wärmetransport zur Batteriezellenoberfläche, wodurch die Temperatur im Inneren der Batteriezelle gemindert werden kann und diese somit vor Überhitzungsgefahr geschützt ist. Das heißt, durch die Anlage der Trennwand 50 mit ihren Anlagekanten 51am Batteriezellengehäuse 12 lässt sich die Wärme in der dargestellten Wärmeableitungsrichtung 52 an das Batteriezellengehäuse 12 abgeben. Die Trennwand 50 kann in waagerechter oder senkrechter Position in der Batteriezelle 10 integriert sein und entsprechend ausgerichtete Zelleinheiten 15 definieren. Zur Gewichtsreduktion weisen die Trennwände 50 Aussparungen 53 auf, die außerdem die Anordnung von die einzelnen Zelleinheiten 15 verbindenden Leitungssystemen ermöglichen.

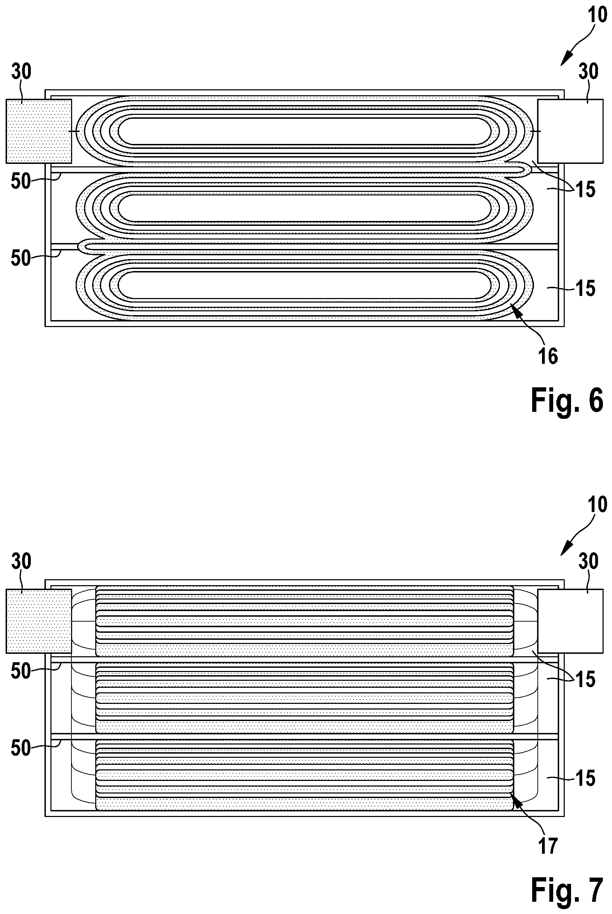

In den Fig. 5, 6 und 7 ist dargestellt, wie mittels der Trennwände 50 unterschiedlich geformte und positionierte Zelleinheiten 15 in einer Batteriezelle 10 angeordnet sein können. Die Trennwände 50 in der Batteriezelle 10 gemäß Fig. 5 sind im Wesentlichen senkrecht angeordnet und die Trennwände 50 in der Batteriezelle 10 gemäß Fig. 6 sind im Wesentlichen waagerecht angeordnet. Es ist aus den Fig. 6 und 7 ersichtlich, dass die Elektroden 11 in den einzelnen Zelleinheiten 15 in unterschiedlicher Weise zueinander angeordnet sein können, wobei in Fig. 6 die Anordnung der Elektroden 11 in einem so genannten "Jelly Roll" 16 und in Fig. 7 die Anordnung der Elektroden 11 in einem Laminat 17 gezeigt ist. Die in den Fig. 5 bis 7 gezeigten Zelleinheiten 15 sind elektrisch in Serie geschaltet. Die Leitungsverbindung, ebenso wie eine Verbindung der Berstdrucköffnungen 40, kann durch die Aussparungen 53 in den Trennwänden 50 realisiert werden. Alternativ oder hinzukommend können an den Trennwänden 50 Kontaktzonen eingerichtet sein, an die Elektroden der benachbarten Zelleinheiten 15 an beiden Seiten angeschweißt oder gelötet sind, so dass keine Leitungsverbindung der Zelleinheiten 15 mehr nötig ist. Eine Sonderkonstruktion der Batteriezelle kann zum Beispiel sechs Zelleneinheiten 15 aufweisen, die äquivalent zu einem gegossenen Sechs-Zellen-Modul in herkömmlicher Ausführungsform aufgebaut sind.

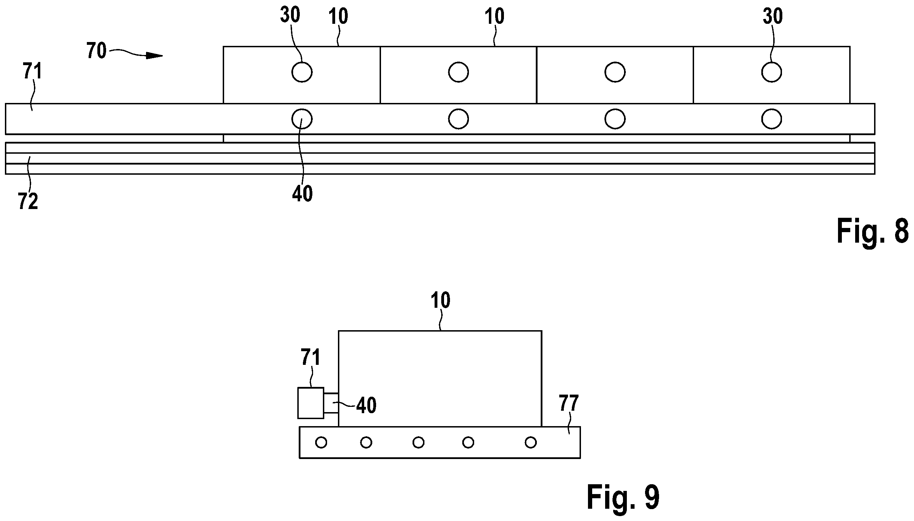

An die Berstdrucköffnung 40 einer jeden Batteriezelle 10 ist entweder ein nicht-dargestelltes Ventil angeschlossen, oder eine Mehrzahl von Berstdrucköffnungen 40. Die von zu einem Batteriezellenpaket 70 nebeneinander angeordneten Batteriezellen 10, wie in Fig. 8 dargestellt, sind mittels einer Zentralleitung 71 parallel miteinander verbunden. Die Berstdrucköffnung 40 hat bevorzugt die Form eines Zylinders, der mit einem Absatz aus dem Batteriezellengehäuse 12 herausragt. Die Länge dieses herausragenden Abschnittes ist derart ausgeführt, dass die Zentralleitung 71 anschließbar ist. Die Berstdrucköffnung 40 kann neben ihrer Funktion zum Abführen von Fluiden auch zur Elektrolyt-Befüllung dienen. In Fig. 9 ist das Batteriezellenpaket 70 aus Fig. 8 in Ansicht von der Seite dargestellt, wobei ersichtlich ist, dass an die Berstdrucköffnung 40 ein nicht-dargestelltes Ventil oder auch die Zentralleitung 71 gemäß Fig. 8 anschließbar ist. Die Zentralleitung 71 besteht vorteilhafterweise aus einem chemisch und thermisch beständigem Material, welches zugleich kostengünstig, stabil sowie relativ leicht ist, wozu Metalle oder Kunststoffe eingesetzt werden können. In vorteilhafter Weise besitzt die Zentralleitung 71 eine Innenbeschichtung aus chemisch- und hitzebeständigem Material und/oder eine Außenwärmeisolation.

Zur großflächigen effizienten Abkühlung der einzelnen Batteriezellen 10 sind diese mit ihren Grundflächen 19 auf einer ersten Kühlplatte 77 aufgestellt.

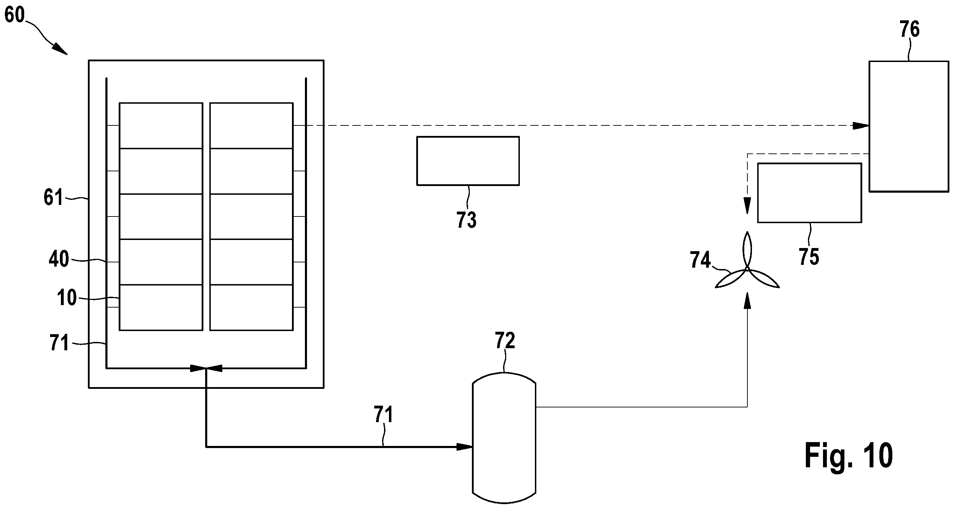

Ein Sicherheitssystem zur Entgasung einer mehrere Batteriezellen 10 umfassenden Batterie 60 ist in Fig. 10 dargestellt. Die einzelnen Batteriezellen 10, die in einem Batteriegehäuse 61 angeordnet sind, sind mit ihren Berstdrucköffnungen 40 an die Zentralleitung 71 angeschlossen, die in einem Sammelbehälter 72 zur Aufnahme der Fluide aus den Batteriezellen 10 mündet. Dadurch lassen sich die ausgetretenen Fluide einer Batteriezelle 10 ableiten und somit die Gefahr einer Kettenreaktion für benachbarte Batteriezellen 10 vermindern. In alternativer Ausführungsform kann vorgesehen sein, dass die austretenden Fluide in der Zentralleitung 71 gesammelt werden, wodurch ein Sammelbehälter 72 nicht mehr benötigt wird. Die Öffnung eines Ventils an einer Berstdrucköffnung 40 wird durch geeignete Sensoren 73 detektiert und einem Batterie-Management-System 76 gemeldet. Dieses Batterie-Management-System 76 sendet ein entsprechendes Steuersignal zu einem Ventilator 74, der von einer Ventilator-Steuerungseinrichtung 75 kontrolliert wird. Der Betrieb des Ventilators 74 bewirkt die Abführung von im Sammelbehälter 72 aufgenommenen Gasen an die Umgebung.

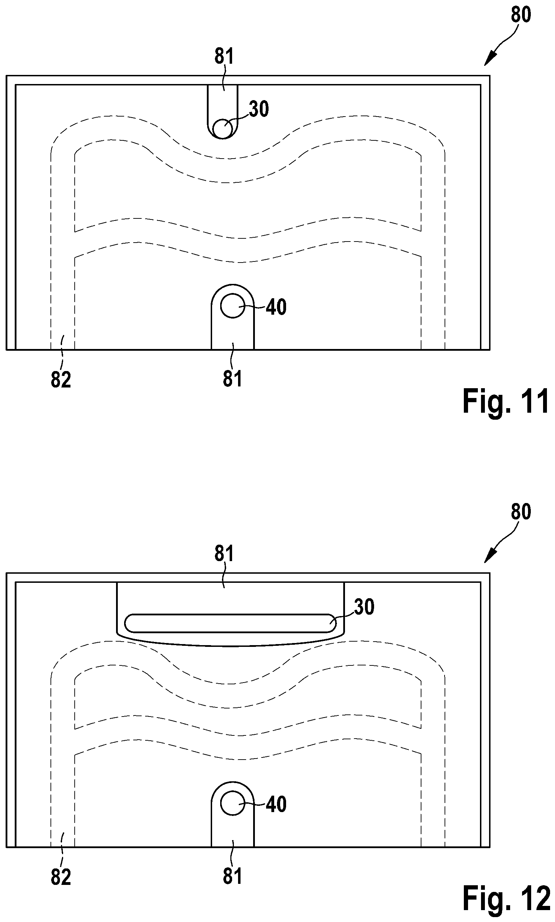

Eine jede Batteriezelle 10 kann dabei an ihrer Stirnwand 13 mit einer Trennplatte 80 versehen sein, wie sie zum Beispiel in den Fig. 11 und 12 in unterschiedlichen Ausführungsformen dargestellt ist. Die Trennplatte 80 kann dabei die Batteriezellen 10 elektrisch und thermisch von elektrotechnischen Komponenten 90, wie zum Beispiel Schaltungselementen, Leitungen, Hochleistungselektronik, Steuergeräten usw. trennen. Sie ermöglicht somit auch die Einkapselung dieser elektrotechnischen Komponenten 90 außerhalb der Batteriezelle 10. Die Trennplatte 80 kann zwecks elektrischer Isolation mit einem Isolationsmaterial beschichtet sein oder eine wärmeleitende Isolationsfolie auf der zur Batteriezelle 10 gerichteten Wandseite aufweisen. Außerdem kann sie einen oder mehrere Durchlässe 81 zur Ermöglichung der Leitungsführung für Terminal- sowie Berstdruckventil-Verbindungsleitungen aufweisen. Die Durchlässe 81 können auch in Nuten- oder Schlitzform ausgestaltet sein, um die Montage der Trennplatte 80 zu vereinfachen. Wie aus Fig. 11 und 12 ersichtlich ist, sind in der Trennplatte 80 Kühlungskanäle 82 integriert, die ein Durchströmen der Trennplatte 80 mit einem Kühlmedium zwecks Wärmeableitung ermöglichen. Bei einem im Wesentlichen stiftförmig ausgeführten Terminal 30 kann der Durchlass 81 für dieses Terminal 30 entsprechend klein ausgeführt sein. Ist jedoch das Terminal 30, wie in Fig. 12 gezeigt, im Wesentlichen plattenförmig ausgeführt, weist der Durchlass 81 eine entsprechende Größe auf. Vorteilhafterweise steht die Trennplatte 80 im thermischen Kontakt mit der Bodenplatte des Batteriezellengehäuses 12, um somit optimal die Wärme an das Batteriezellengehäuse abzugeben. Die gezeigte Trennplatte 80 ist für unterschiedliche Kühlungskonzepte, wie zum Beispiel mit Luft, Kühlwasser oder Kältemittel als Kühlmedium, geeignet.

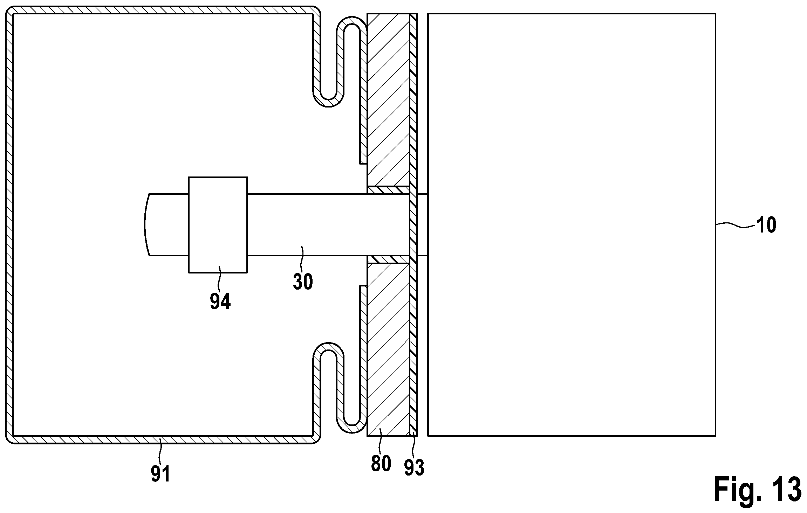

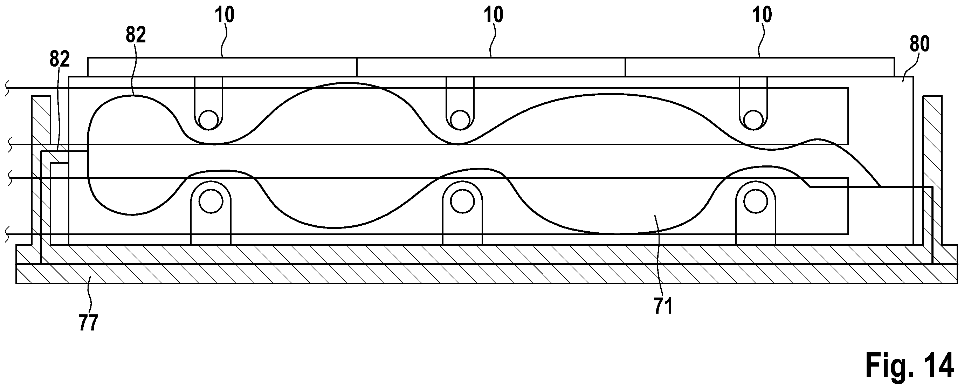

Insbesondere aus Fig. 13 ist ersichtlich, wie die Einkapselung am Terminal 30 realisiert ist. Mittels der Einkapselung 91 lassen sich elektrotechnische Komponenten in der Umgebung des Terminals 30 von der Batteriezelle 10 separieren und außerdem gegen Umwelteinflüsse, insbesondere Feuchtigkeit und Kondensflüssigkeit, schützen. Die Einkapselung 91 ist dabei fest mit der Trennplatte 80 verbunden, wobei diese einseitig mit einer Isolationsfolie 93 beschichtet ist, die zwischen Trennplatte 80 und Batteriezelle 10 angeordnet ist. Die Einkapselung 91 kann mittels einer Klebeverbindung an der Trennplatte 80 angeordnet sein. Mittels der Trennplatte 80 lässt sich nun von der Stirnfläche der Batteriezelle, an der die Terminals 30 angeordnet sind, Wärme ableiten. Dies ermöglicht die Anwendbarkeit bestehender Kühlsysteme für herkömmliche Batteriezellen. Neben einzelner Trennplatten 80, die an jeweils nur einer Batteriezelle 10 angeordnet sind, können jedoch auch mehrere Batteriezellen 10 mit einer durchgehenden, gemeinsamen Trennplatte 80 versehen werden, wie in Fig. 14 dargestellt ist. Ein gemeinsamer Kühlungskanal 82 ermöglicht die Strömung eines Kühlmediums entlang der Stirnwände mehrerer Batteriezellen 10. Dieser Kühlungskanal 82 kann an eine erste Kühlplatte 77, auf der die Batteriezellen 10 aufgestellt sind, angeschlossen sein. Dieses Konzept ist Material- und Fertigungszeit reduzierend, da jeweils nur ein Ein- und Auslass für das Kühlmedium vorzusehen ist.

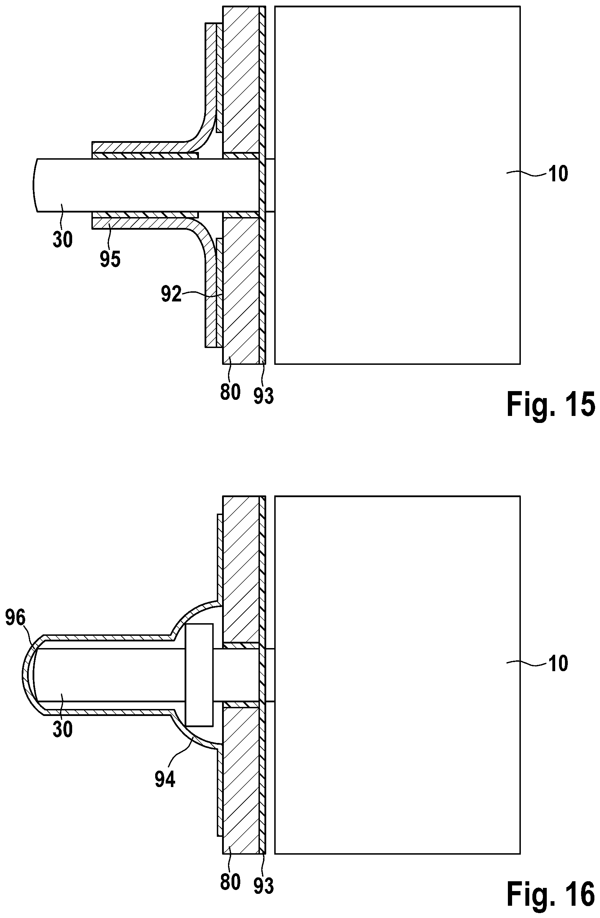

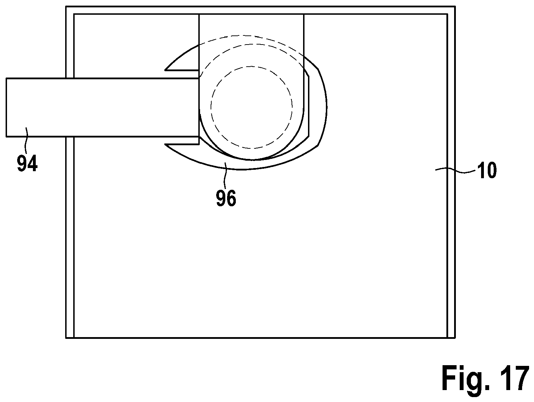

Zur Kühlung des Terminals 30 an einer Batteriezelle ist vorgesehen, dass dieses mittels eines Klemmteils 95, welches an der Trennplatte mittels einer Klebeverbindung 92 angeordnet ist, zumindest teilweise umschlossen ist. Dies bietet sich insbesondere bei der Ausführungsform an, bei der ein Terminal 30 mit einer Stromschiene 94 mit anderen Terminals 30 verbunden ist bzw. einen integralen Bestandteil der Stromschiene ausbildet. Der Bereich der Kontaktierung zwischen Klemmteil 95 und Terminal 30 sollte elektrisch isolierend beschichtet sein, wobei das Klemmteil 95 mit einer Presspassung, gegebenenfalls aufgrund einer Federwirkung, auf das Terminal 30 wirkt. Mittels des Klemmteils 95 lässt sich Wärme im Terminal 30 an die gekühlte Trennplatte 80 abführen. In alternativer Ausführungsform kann das Terminal 30 mit einer Bedeckung 96 versehen sein, welches als formschlüssiges Bauteil das Terminal 30 umhüllt und auf der Trennplatte 80 anliegt. Eine solche Bedeckung 96 ist in den Fig. 16 in Ansicht von der Seite und in Fig. 17 in Ansicht von oben dargestellt, wobei ersichtlich ist, dass eine an das Terminal 30 angeschlossene Stromschiene 94 einseitig aus der Bedeckung 96 herausragt. Die Bedeckung 96 ist somit geeignet, Schraubanschlüsse an Terminals 30 sowie auch Stromschienen 94 zumindest teilweise abzudecken.

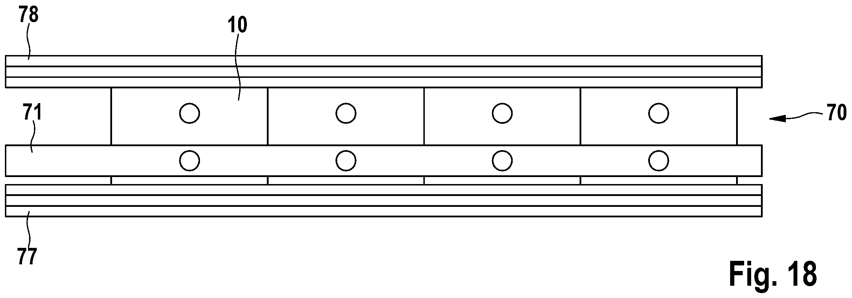

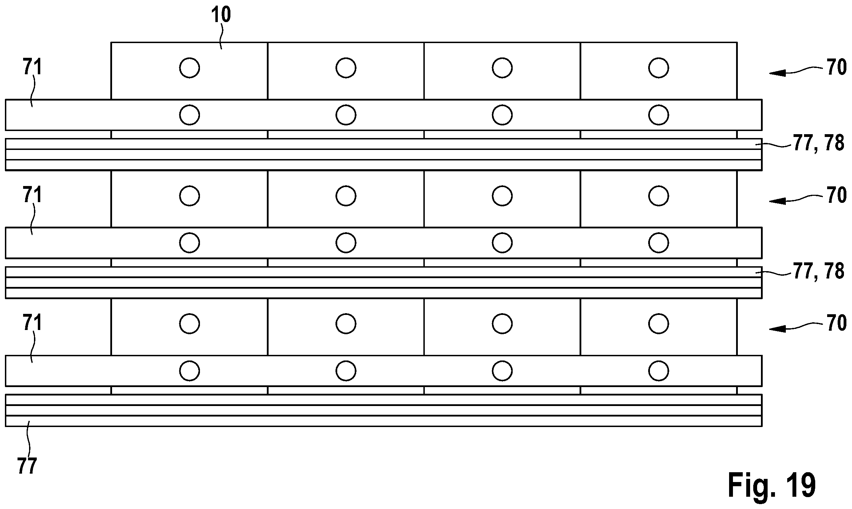

Die Batteriezellen 10 können, insbesondere, wenn sie als Batteriezellenpaket 70 eine Batterie 60 ausbilden, wie in den Fig. 18 und 19 dargestellt gekühlt werden. In Fig. 18 ist das Kühlsystem an nur einer Batteriezellenschicht dargestellt, wobei die einzelnen Batteriezellen 10 auf einer ersten Kühlplatte 77 aufliegen und von einer zweiten Kühlplatte 78 abgedeckt sind, so dass sie von oben sowie von unten einer maximalen Kühlungswirkung ausgesetzt sind. Bei Übereinanderanordnung mehrerer Schichten von Batteriezellen 10 lassen sich die Kühlplatten 77 und 78, wie in Fig. 19 dargestellt, anordnen, so dass die eine erste Schicht von Batteriezellen abdeckende zweite Kühlplatte 78 gleichzeitig die erste Kühlplatte 77 für darüber angeordnete Batteriezellen ist.

## Patentansprüche

1. Batterie (60) mit einer Mehrzahl von Batteriezellen (10), wobei eine Batteriezelle (10) im Wesentlichen eine Quaderform aufweist und deren Körper eine Grundfläche (19), eine Deckfläche (20) und wenigstens eine winklig zur Grundfläche (19) angeordnete Seitenfläche (18) aufweist, wobei
die maximale Erstreckung (22) der Grundfläche (19) größer ist als die durch die Seitenfläche (18) definierte Höhe (21) des Batteriezellenkörpers, und die Batteriezelle (10) den jeweiligen Batteriezellenpolen zugeordnete Terminals (30) aufweist, wobei
die Grundfläche (19) und die Deckfläche (20) kongruent sind und die größten Flächen des Körpers der Batteriezelle (10) ausbilden, wobei die Terminals (30) an wenigstens einer Seitenfläche (18) der Batteriezelle (10) angeordnet sind, die Batteriezelle (10) mittels wenigstens einer Trennwand (50) in Zelleinheiten (15) unterteilt ist, und
die Trennwand (50) derart wärmeleitfähig ausgestaltet ist, dass mit ihr eine Wärmeableitung aus wenigstens einer durch sie abgegrenzten Zelleinheit (15) zur Oberfläche der Batteriezelle (10) realisierbar ist,
wobei die Trennwand (50) aus einem wärmeleitfähigen Material besteht, wobei an der Grundfläche (19) eine erste Kühlplatte (77) angeordnet ist, wobei
die Batteriezellen (10), im Paket (70) die Batterie (60) ausbildend, derart angeordnet sind, dass sich ihre Batteriepole (62) an wenigstens einer Seitenfläche (18) des Batteriezellenpaketes (70) befinden, **dadurch gekennzeichnet, dass** mehrere der Batteriezellen (10) eine Berstdrucköffnung (40) aufweisen, wobei diese Berstdrucköffnungen (40) an eine Zentralleitung (71) zur Ableitung von ausströmenden Fluiden angeschlossen sind, wobei die Zentralleitung in einem Sammelbehälter (72) zur Aufnahme von Fluid aus den Batteriezellen (10) mündet.

2. Batterie (60) nach dem vorherigen Anspruch1, wobei die Batteriezellen (10) mit ihren Grundflächen (19) auf der ersten Kühlplatte (77) aufliegen und dass die Batterie (60) wenigstens eine zweite Kühlplatte (78) aufweist, wobei die zweite Kühlplatte (78) auf den Deckflächen (20)
der Batteriezellen (10) aufliegt.

3. Batterie (60) nach Anspruch 2, **dadurch gekennzeichnet, dass** die Batteriezellen (10) nebeneinander und übereinander in Batteriezellenpaketen (70) angeordnet sind, wobei die auf den Deckflächen (20) der Batteriezellen (10) aufliegende zweite Kühlplatte (78) gleichzeitig die erste Kühlplatte (77) für eine darüber befindliche Ebene von Batteriezellen (10) ist, die mit ihren Grundflächen (19) auf dieser Kühlplatte (77) aufliegen.

4. Batterie (60) nach einem der vorhergehenden Ansprüche, **dadurch gekennzeichnet, dass** die Batteriezelle (10) außerdem zwei Terminals (30) aufweist und jeweils ein Terminal (30) an einer von zwei sich gegenüberliegenden Seitenflächen (18) der Batteriezelle (10) angeordnet ist.

5. Batterie (60) nach einem der vorhergehenden Ansprüche, **dadurch gekennzeichnet, dass** die Batteriezelle (10) wenigstens eine Berstdrucköffnung (40) aufweist, welche an einer der Seitenflächen (18) angeordnet ist.

6. Batterie (60) nach einem der vorhergehenden Ansprüche, **dadurch gekennzeichnet, dass** die Trennwand (50) zur Fixierung und / oder Positionierung der Elektroden (11) wenigstens einer Zelleinheit (15) dient.

## Claims

1. Battery (60) having a plurality of battery cells (10), wherein a battery cell (10) has substantially a parallelepipedal shape and the body thereof has a bottom surface (19), a top surface (20) and at least one side surface (18) arranged at an angle with respect to the bottom surface (19), wherein
the maximum extent (22) of the bottom surface (19) is greater than the height (21) of the battery cell body defined by the side surface (18),
and the battery cell (10) has terminals (30) assigned to the respective battery cell poles, wherein
the bottom surface (19) and the top surface (20) are congruent and form the largest surfaces of the body of the battery cell (10), wherein
the terminals (30) are arranged on at least one side surface (18) of the battery cell (10), and the battery cell (10) is subdivided into cell units (15) by means of at least one partition wall (50), and
the partition wall (50) is configured in a thermally conductive fashion in such a way that it can be used to realize heat dissipation from at least one cell unit (15) delimited by it to the surface of the battery cell (10),
wherein the partition wall (50) consists of a thermally conductive material, wherein a first cooling plate (77) is arranged on the bottom surface (19), wherein
the battery cells (10), forming the battery (60) in the pack (70), are arranged in such a way that their battery poles (62) are situated on at least one side surface (18) of the battery cell pack (70), **characterized in that** a plurality of the battery cells (10) have a bursting pressure opening (40), wherein said bursting pressure openings (40) are connected to a central line (71) for carrying away outflowing fluids, wherein the central line leads to a collecting container (72) for receiving fluid from the battery cells (10).

2. Battery (60) according to the preceding Claim 1, wherein the battery cells (10) bear by their bottom surfaces (19) on the first cooling plate (77) and wherein the battery (60) has at least one second cooling plate (78), wherein the second cooling plate (78) bears on the top surfaces (20) of the battery cells (10).

3. Battery (60) according to Claim 2, **characterized in that** the battery cells (10) are arranged next to one another and one above another in battery cell packs (70), wherein the second cooling plate (78) bearing on the top surfaces (20) of the battery cells (10) is simultaneously the first cooling plate (77) for a plane - situated there-above - of battery cells (10) which bear by their bottom surfaces (19) on said cooling plate (77) .

4. Battery (60) according to any of the preceding claims, **characterized in that** the battery cell (10) additionally has two terminals (30) and a respective terminal (30) is arranged on one of two mutually opposite side surfaces (18) of the battery cell (10).

5. Battery (60) according to any of the preceding claims, **characterized in that** the battery cell (10) has at least one bursting pressure opening (40) arranged on one of the side surfaces (18).

6. Battery (60) according to any of the preceding claims, **characterized in that** the partition wall (50) serves for fixing and/or positioning the electrodes (11) of at least one cell unit (15).

## Revendications

1. Batterie (60), comprenant une pluralité de cellules de batterie (10), une cellule de batterie (10) possédant sensiblement une forme parallélépipédique et son corps possédant une surface de base (19), une surface de recouvrement (20) et au moins une surface latérale (18) disposée selon un certain angle par rapport à la surface de base (19),
la projection maximale (22) de la surface de base (19) étant supérieure à la hauteur (21) définie par la surface latérale (18) du corps de cellule de batterie, et la cellule de batterie (10) possédant des bornes (30) associées aux pôles de cellule de batterie respectifs, la surface de base (19) et la surface de recouvrement (20) étant congruentes et formant les plus grandes surfaces du corps de la cellule de batterie (10),
les bornes (30) étant disposées au niveau d'au moins une surface latérale (18) de la cellule de batterie (10), la cellule de batterie (10) étant subdivisée en unités de cellule (15) au moyen d'au moins une paroi de séparation (50), et
la paroi de séparation (50) est configurée conductrice de chaleur de telle sorte qu'elle peut réaliser une dissipation de chaleur depuis au moins une unité de cellule (15) délimitée par elle vers la surface de la cellule de batterie (10),
la paroi de séparation (50) se composant d'un matériau conducteur de chaleur, une première plaque de refroidissement (77) étant disposée au niveau de la surface de base (19),
les cellules de batterie (10), formant la batterie (60) en paquet (70), étant disposées de telle sorte que leurs pôles de batterie (62) se trouvent au niveau d'au moins une surface latérale (18) du paquet de cellules de batterie (70), **caractérisée en ce que** plusieurs des cellules de batterie (10) possèdent une ouverture de pression d'éclatement (40), ces ouvertures de pression d'éclatement (40) étant raccordées à une conduite centrale (71) destinée à évacuer des fluides émis, la conduite centrale débouchant dans un récipient central (72) destiné à recueillir le fluide en provenance des cellules de batterie (10).

2. Batterie (60) selon la revendication 1 précédente, les cellules de batterie (10) reposant avec leurs surfaces de base (19) sur la première plaque de refroidissement (77) et la batterie (60) possédant au moins une deuxième plaque de refroidissement (78), la deuxième plaque de refroidissement (78) reposant sur les surfaces de recouvrement (20) des cellules de batterie (10) .

3. Batterie (60) selon la revendication 2, **caractérisée en ce que** les cellules de batterie (10) sont disposées les unes à côté des autres et les unes au-dessus des autres dans les paquets de cellules de batterie (70), la deuxième plaque de refroidissement (78) qui repose sur les surfaces de recouvrement (20) des cellules de batterie (10) étant en même temps la première plaque de refroidissement (77) pour un niveau de cellules de batterie (10) qui se trouve au-dessus de celle-ci et qui reposent sur cette plaque de refroidissement (77) avec leurs surfaces de base (19).

4. Batterie (60) selon l'une des revendications précédentes, **caractérisée en ce que** la cellule de batterie (10) possède en outre deux bornes (30) et une borne (30) est respectivement disposée au niveau de deux surfaces latérales (18) mutuellement opposées de la cellule de batterie (10).

5. Batterie (60) selon l'une des revendications précédentes, **caractérisée en ce que** la cellule de batterie (10) possède au moins une ouverture de pression d'éclatement (40) qui est disposée au niveau de l'une des surfaces latérales (18).

6. Batterie (60) selon l'une des revendications précédentes, **caractérisée en ce que** la paroi de séparation (50) sert au calage et/ou au positionnement des électrodes (11) d'au moins une unité de cellule (15).
